# EUROPEAN PATENT APPLICATION

(11) **EP 1 387 265 A1**
(43) Date of publication of application: **04.02.2004**
(21) Application number: 02388049.5
(22) Date of filing: 02.08.2002
(51) Int. Cl.: G06F 9/45

(54) **Optimised code generation**

(71) Applicant: Telefonaktiebolaget L M Ericsson (Publ), 126 25 Stockholm (SE)
(72) Inventor: Aberg, Jan, SE-22220 Lund (SE); Dahlgreen, Fredrik, SE-22649 Lund (SV); Skeppstedt, Jonas, SE-22649 Lund (SV)
(74) Representative: Sigh, Erik

(57) **Abstract**

A method of generating executable program code for a data processing system comprising an encoding stage for generating a compressed intermediate representation (E-IR) of an input code (IC) and a decoding stage for generating the executable code from the intermediate representation. The encoding stage comprises transforming (301) the input code including performing code optimisation steps resulting in transformed code (302) and compiler information (303) about the transformed code; extracting (304,306) state information (305) of a statistical model and statistical information (PDF) from the transformed code and the compiler information; and encoding (307) the transformed code and the compiler information using the extracted state information and statistical information and resulting in the compressed intermediate representation. The decoding stage comprises decoding the intermediate representation resulting in the transformed code and the compiler information; and compiling the transformed code using the decoded compiler information and resulting in the executable code.

## Description

This invention relates to the generation of executable program code for a data processing system.

The memory of a data processing system should be kept as small as possible in order to keep the system inexpensive. In particular, this is an important general requirement for mobile data processing systems, for example mobile terminals, e.g. mobile telephones, PDAs etc. On the other hand, there is a demand for enabling mobile terminals to download and execute an increasing variety of software applications, thereby increasing the memory usage in mobile terminals.

Furthermore, the software applications should perform fast and efficiently when executed on a data processing system.

It is also desirable that the generated and downloaded software should be suitable for different types of data processing systems, e.g. all mobile telephones of a certain manufacturer.

Hence, common requirements for software applications include:
- Small size of the code to be stored in the data processing system.
- Machine-independent code.
- Optimised code.

For example, Java is known as a programming language generating platform independent code, so called bytecode. Java bytecode may be distributed in a compressed form, e.g. a Lempel-Ziv compression, or other general purpose compression techniques.

There are several possible ways of executing Java bytecode, including interpretation by a Java Virtual machine, ahead-of-time compilation by a compiler generating executable code, and Just-In-Time (JIT) compilation.

However, the above methods have the disadvantage that they do not combine all the above requirements, as they either generate machine dependant code or result in slow code execution. In particular JIT compilation is a popular approach where parts of the bytecode is compiled just before its execution. During execution, the compilation results in an overhead which, nevertheless, is often acceptable. However, as the just-in time compilation needs to be short in order to limit this overhead, the resulting code is not well-optimised, thereby yielding slow and inefficient executable code.

Christopher W. Fraser, "Automatic Inference of Models for Statistical Code Compression", (REF), discloses a method of compressing computer programs where machine learning algorithms are applied to compress intermediate representations of conventional compilers.

However, the above prior art method does not address the problem of providing efficient executable code.

It is a further object of the invention to solve the problem of providing an encoding scheme which provides improved compression ratios.

The above and other problems are solved by a method of generating executable program code for a data processing system, the method comprising
an encoding stage for generating a compressed intermediate representation of an input code, the encoding stage comprising:
- transforming the input code including performing a selected set of code optimisation steps resulting in transformed code and compiler information about the transformed code;
- extracting state information of a statistical model and statistical information from the transformed code and the compiler information; and
- encoding the transformed code and the compiler information using the extracted state information and statistical information and resulting in the compressed intermediate representation;
a decoding stage for generating the executable program code from the compressed intermediate representation, the decoding stage comprising:
- decoding the compressed intermediate representation resulting in the transformed code and the compiler information; and
- further compiling the transformed code using the decoded compiler information and resulting in the executable program code.

Consequently, it is an advantage of the invention that it provides a framework for compiling program code which results both in an efficiently compressed intermediate representation of the program code and a high degree of code optimisation during the compilation of the encoding stage.

The term optimisation is in this document used with the meaning of transforming with the goal of increasing the performance of the code.

Hence, it is an advantage that time consuming optimisation steps may be performed during the encoding stage, thereby providing a highly optimised intermediate representation which, at the decoder, may be transformed into optimised executable code without large overhead.

The compressed intermediate representation can efficiently be transferred to and/or stored in a data processing system, as it reduces the size of the code to be transferred to and/or stored in the data processing system. It is an advantage of the invention that it provides a high compression ratio.

It is an advantage of the invention that the first compilation stage provides compiler information in addition to the transferred code. The stream of compiler information contains information that has no direct impact on the correctness of reconstructed executable code, such as results from an optimisation analysis performed during the first compilation stage. The compiler information serves two purposes:
- If may contain semantic information, such as high-level language data types, thereby improving the compression as it allows better modeling. This may be information that has been used by the initial compiler in earlier passes, and that is reflected in the distribution of register values etc.
- It can convey compiler information for use by the compiler at the decoder stage. This may be information that has been extracted by the initial compiler from the input code in a source file, but that is not easy, or even not possible, to extract from the compressed compiled data.
An item of compiler information may serve one or both of the above purposes.

Hence, the compiler information from the first compilation stage may be utilised by the encoder as well as by the decoder stage. Consequently, the step of further compiling the transformed code in the target device has access to the compiler information generated by the compilation step of the encoding stage, thereby increasing the performance of the generated code in the target device. Furthermore, an improved data modelling is provided by the availability of the compiler information during the encoding stage, thereby improving the compression ratio of the compressed intermediate representation.

It is yet a further advantage that within the framework according to the invention a compression and file transfer between an encoder and a decoder can be applied at any pass of the compilation.

Furthermore, the compilation in the encoder stage may be optimised according to specific needs of a particular embodiment. In one embodiment, the compilation in the encoder stage may be optimised to yield high compression ratio. In another embodiment the compilation may be adapted to yield a trade-off between compression and compilation time.

In a preferred embodiment, the encoding stage is performed on a first data processing system and the decoding stage is performed on a second data processing system; the method further comprising transferring the compressed intermediate representation from the first data processing system to the second data processing system. Hence, the initial compilation phase is performed off-line on a data processing system which is different from the target data processing system, thereby allowing for code optimisation and/or compression techniques which require more resources than available at the target system. Hence, in this embodiment, the compression phase takes place before the program is transferred to the target system, e.g. a mobile phone, while the decompression and execution phase take place on a mobile phone. Correspondingly, the code optimisations performed by the compilers at the encoder and the decoder stage will be referred to as pre-transfer and post-transfer optimisation, respectively.

The transformed code includes a representation of the computer program which reflects the optimisation steps performed in the encoding stage and which is suitable for compression. The transformed code may comprise any suitable intermediate representation of the input code which can be further compiled and linked by the decoder stage to obtain optimised executable code. Examples of transferred code comprise an optimised machine-independent intermediate representation, an optimised partially machine-independent intermediate representation suitable for a limited class of target architectures, an optimised machine-specific intermediate representation suitable only for a specific target architecture, etc. As the degree of platform-independence may vary, a trade-off between platform independence and optimisation may be achieved.

The compressed intermediate representation may be transferred to the target system through wireless communication (e.g. UMTS, Bluetooth, or WLAN), wire (e.g. USB, serial port, Ethernet), removable memory (e.g. MultimediaCard, Memory Stick), or others.

In other embodiments, the encoding stage may be performed on the target device, e.g. a mobile phone. In this embodiment, the mobile phone still takes advantage of the high compression, and the good optimisations from an off-line optimisation analysis.

The extracted state information comprises information generated by the compiler about the state of the compiler during compilation. In a preferred embodiment of the invention the step of generating the state information and statistical information further comprises
- obtaining state information from a state machine based on the transformed code and the compiler information; and
- obtaining probability information from a statistical model based on the obtained state information.
It is an advantage of the invention that it provides a data modelling which results in high compression ratios.

The state machine may comprise a number of models which are combined to yield the state variable for the statistical model.

In one embodiment, the state machine comprises a syntactic model of at least one of the transformed code and the compiler information. For example, the state may be a function of the preceeding symbols from the compiled data stream.

In one embodiment the state machine comprises an execution model of the transformed code, where the state variable may be, for instance, the content of the stack of the virtual machine, or a function of the memory access pattern.

In a further preferred embodiment, the state machine comprises a model of the compiler information. The statistical model of the compiler information depends on the type of compiler information, and may include elements such as class information, data types, the register allocation of variables, context information, etc., that are not readily available from the compiled data stream. Consequently, improved compression ratios may be achieved by utilising the compiler information.

Hence, by combining the compilation and encoding stages according to the invention and providing information about not only the syntax of the transformed code but also about its content to the encoder, e.g. information about class information, data types, context information, etc., an improved data modelling and, thus, improved compression ratios may be achieved.

In a preferred embodiment of the invention, the method further comprises
- storing the compressed intermediate representation; and
- performing the decoding stage in connection with a subsequent execution of the generated executable program code.
Hence, an efficient executable code is generated by the target device on the basis of a compressed and, as least partly, platform independent representation, where the code generation only creates little overhead in connection with the actual code execution, and where little storage capacity is required for storing the compressed intermediate representation on the target device.

In yet another embodiment, the compressed code is transferred from a network server to a stationary desktop computer, where the decoding and execution takes place. It is noted that the compressed intermediate representation may be transferred to a number of different receiving devices, each implementing a different implementation of the decoding stage. For example different decoders may be implemented for a mobile phone, a PDA, and a PC, respectively.

In other embodiments, the code is compressed on a mobile device, transferred to a server, and later downloaded to one or more mobile devices with different platforms. Hence, the compressed intermediate representation, after being placed on the target device, may be decompressed/executed on the same device or on different devices. In addition, in some embodiments, it may be transferred to other target devices or uploaded to servers for further distribution.

In one embodiment, the compressed intermediate representation is produced by a compiler executing on a computer that employs an instruction format (e.g. Pentium-4 based desktop PC) which is different from the code that shall be compressed (e.g. Java bytecode) and/or the target system (e.g. ARM9E-based mobile phone). However, in other embodiments, the instruction formats may be the same or partly the same.

The input code may be any suitable representation of the computer program different from the standard executable format of the host processor. In one embodiment of the invention, the input code comprises Java bytecode.

Other examples of such input code include:
- A platform independent code format which is interpreted or in some manner compiled for the underlying architecture.
- The execution of the binary code of one architecture on a processor with another architecture, for example the execution of Intel X86 code on an ARM processor.

In yet another preferred embodiment of the invention, the transformed code comprises a number of code elements and the method further comprises determining a probability distribution of said code elements and providing the determined probability distribution to the step of generating statistical information. It is an advantage of the invention that it provides a compression method which may be applied to many different types of code. Alternatively, the probability distributions may be predetermined and tabulated, thereby providing a further improved compression ratio.

The transformed code and the compiler information may be coupled in different ways. In one embodiment they are completely interleaved, providing the compiler at the decoder with information at the time it is needed. In another embodiment, all compiler information is transferred and/or stored as a pre-amble to the transformed code. There could also be intermediate forms.

The present invention can be implemented in different ways including the method described above and in the following, a system, and further product means, each yielding one or more of the benefits and advantages described in connection with the first-mentioned method, and each having one or more preferred embodiments corresponding to the preferred embodiments described in connection with the first-mentioned method and disclosed in the dependant claims.

It is noted that the features of the method described above and in the following may be implemented in software and carried out in a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

The invention further relates to a method of generating program code for a data processing system, the method comprising
- transforming an input code including performing a selected set of optimisation steps resulting in transformed code and compiler information about the transformed code;
- extracting state information of a statistical model and statistical information from the transformed code and the compiler information; and
- encoding the transformed code and the compiler information using the extracted state information and statistical information and resulting in a compressed intermediate representation of the input code; the compressed intermediate representation being adapted to be decoded and further compiled in a subsequent decoding stage for generating executable program code.

The invention further relates to a method of generating executable program code in a data processing system, the method comprising
- receiving a compressed intermediate representation of an input code, the compressed intermediate representation including encoded transformed code generated and at least partially optimised by a compiler and encoded compiler information indicative of further information generated by the compiler about the transformed code, the encoded transformed code and the encoded compiler information being encoded using state information of a statistical model and statistical information extracted from the transformed code and the compiler information;
- decoding the compressed intermediate representation resulting in the transformed code and the compiler information; and
- further compiling the transformed code using the decoded compiler information and resulting in the executable program code.

The invention further relates to a data processing system for generating executable program code, the system comprising
an encoding module adapted to generate a compressed intermediate representation of an input code, the encoding module comprising:
- first compiler means adapted to transform the input code including performing a selected set of code optimisation steps and resulting in transformed code and compiler information about the transformed code;
- processing means adapted to extract state information of a statistical model and statistical information from the transformed code and the compiler information; and
- encoding means adapted to encode the transformed code and the compiler information using the extracted state information and statistical information and resulting in the compressed intermediate representation;
a decoding module adapted to generate the executable program code from the compressed intermediate representation, the decoding module comprising:
- decoding means adapted to decode the compressed intermediate representation resulting in the transformed code and the compiler information; and
- second compiler means adapted to further compile the transformed code using the decoded compiler information and resulting in the executable program code.

The invention further relates to an encoding device for generating program code for a data processing system, the encoding device comprising
- compiler means adapted to transform an input code including performing a selected set of code optimisation steps resulting in transformed code and compiler information about the transformed code;
- processing means adapted to extract state information of a statistical model and statistical information from the transformed code and the compiler information; and
- encoding means adapted to encode the transformed code and the compiler information using the extracted state information and statistical information and resulting in a compressed intermediate representation of the input code; the compressed intermediate representation being adapted to be decoded and further compiled in a subsequent decoding stage for generating executable program code.

The invention further relates to a data processing system for generating executable program code, the data processing system comprising
- receiving means adapted to receive a compressed intermediate representation of an input code, the compressed intermediate representation including encoded transformed code generated and at least partially optimised by a compiler and encoded compiler information generated by the compiler indicative of further information generated by the compiler, the encoded transformed code and the encoded compiler information being encoded using state information of a statistical model and statistical information extracted from the transformed code and of the compiler information;
- decoding means adapted to decode the compressed intermediate representation resulting in the transformed code and the compiler information; and
- compiler means adapted to further compile the transformed code using the decoded compiler information and resulting in the executable program code.

The invention further relates to a data record comprising a compressed intermediate representation of an input code, the compressed intermediate representation including encoded transformed code generated and at least partially optimised by a compiler and encoded compiler information indicative of further information generated by the compiler, the encoded transformed code and the encoded compiler information being encoded using state information of a statistical model and statistical information extracted from the transformed code and from the compiler information; the compressed intermediate representation being adapted to be decoded and further compiled by a data processing system resulting in executable program code.

The above and further aspects of the invention will be described in more detail in connection with a preferred embodiment and with reference to the drawing in which
fig. 1 shows a block diagram of a system according to an embodiment of the invention comprising a computer for generating a compressed intermediate representation and a mobile terminal;
fig. 2 schematically illustrates examples of the different stages of a typical optimising Java bytecode ahead-of-time compiler that generates efficient native binary code;
fig. 3 shows a block diagram of an encoder according to an embodiment of the invention;
fig. 4 shows a block diagram of a decoder according to an embodiment of the invention;
fig. 5 illustrates a flow graph of an example segment of Java byte code; and
fig. 6 illustrates a flow graph of another example segment of Java byte code; and
fig. 7 shows a block diagram of a data processing system for generating executable program code according to an embodiment of the invention.

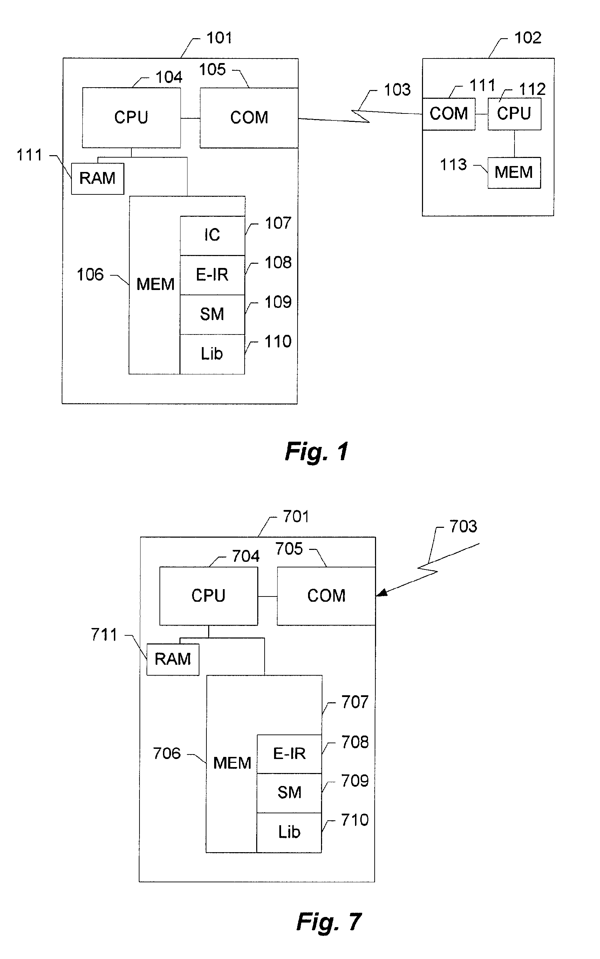

Fig. 1 shows a block diagram of a system according to an embodiment of the invention comprising a computer 101 for generating a compressed intermediate representation and a target device 102 for receiving the compressed intermediate representation and generating executable program code. The computer 101 comprises a processing unit (CPU) 104, a communications unit 105, a RAM 111, and a data storage 106, e.g. a hard disk. The data stored on the data storage 106 comprises the input code 107 to be compiled into executable code for the target device 102, a compressed intermediate representation 108 generated by an encoding process executed by the processing unit, a state machine model 109 for use by the encoding process, and a program code 110 implementing the encoding process when run by the processing unit. Hence, when the encoding program is loaded into the RAM 114 and executed by the CPU, the CPU loads the input code 107 and the state machine data into RAM and creates the compressed intermediate representation. The compressed intermediate representation may be stored on the data storage for subsequent transmission to one or more target devices, or it may be directly transmitted via the communications unit 105.

The communications unit 105 comprises circuitry and/or devices suitable for enabling communication of data via a communications link 103 to the target device 102. Examples of such circuitry comprise radio transmitters/receivers for wireless communication (e.g. UMTS, Bluetooth, or WLAN), a receiver/transmitter for other suitable electromagnetic signals, circuitry suitable for enabling wired communications, e.g. a network interface, a network card, a cable modem, a telephone modem, an Integrated Services Digital Network (ISDN) adapter, a Digital Subscriber Line (DSL) adapter, a USB port, a serial port, an Ethernet adapter, or the like.

The target device 102 comprises a corresponding communications unit 111, a processing unit 112 and a memory 113. Upon receipt of the compressed intermediate representation, the representation may be stored in the memory 113 of the device for subsequent compilation, e.g. a Just-in-time compilation when the program code is about to be executed. Hence, when the program code is to be executed by the processing unit 112, the processing unit 112 loads the compressed intermediate representation from the memory 113, decodes the compressed intermediate representation and generates executable code which, subsequently, is executed by the processing unit 112. This has the advantage that by storing the compressed representation, the storage capacity required for storing the program code in the memory 113 is reduced. Since, according to the invention, the time-consuming optimisation steps of the code compilation are performed off-line during the encoding on the computer 101, the just-in-time compilation on the target device 102 only requires little additional overhead while generating efficient, well optimised program code ensuring efficient performance on the target device.

In other embodiments, the intermediate representation may be decoded and compiled ahead of time, e.g. when receiving a stream of the compressed intermediate representation via the communications unit 111, the processing unit 112 may decode the representation and generate executable code which is stored in the memory 113. This embodiment has the advantage that the overhead in connection with the actual execution is further minimised. Furthermore, this embodiment takes advantage of the small size of the compressed intermediate representation during the transmission of the code from the computer 101 to the target device.

According to the invention, a selection of compilation and code optimisation steps are performed during the encoding performed by the processing unit 104, resulting in an optimised intermediate representation which is compressed during the encoding and prior to the transfer to the target device. Hence, in the following, this intermediate representation will also be referred to as compressible intermediate representation (CIR). A data record comprising the encoded CIR will also be referred to as object file.

The specific selection of optimisation steps performed by the encoder as well as the degree of platform independence of the intermediate representation depend on the specific embodiment, as will be discussed in more detail below.

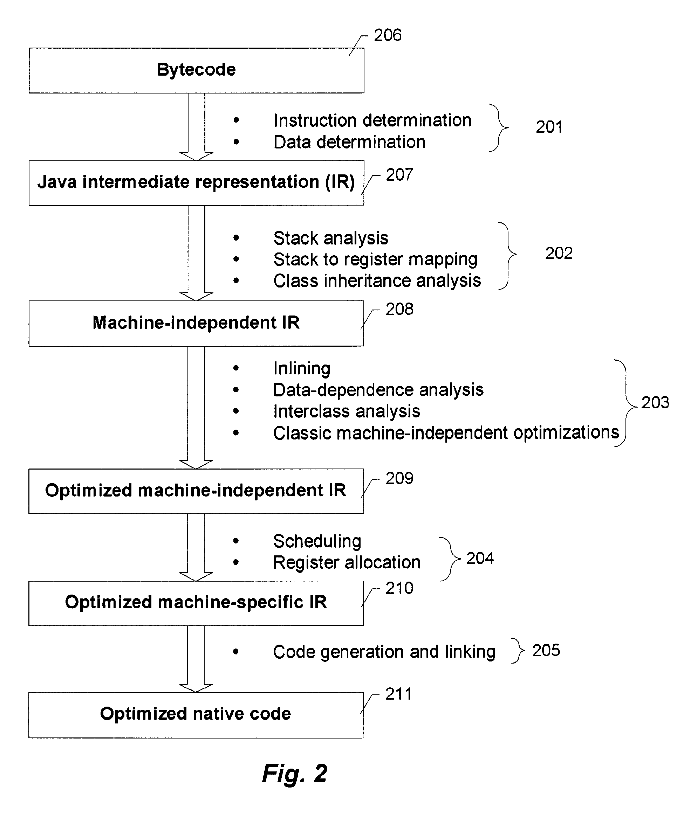

Fig. 2 schematically illustrates examples of the different stages of a typical optimising Java bytecode ahead-of-time compiler that generates efficient native binary code. The different compiling and optimisation steps 201-205 transfer the Java bytecode 206 via a number of intermediate representations (IR) 207-210 into optimised native code 211 for a given platform. It is noted that in between the different steps the different intermediate representations need not be stored in files or even in memory except transitionally, but they may merely exist in a conceptual format so that they could be stored. It is further noted that most of the optimisation steps shown in fig. 2 are not feasible in a JIT-compiler because of the time limitations of the compiling step.

In the following a preferred embodiment of the invention is described in connection with the translation of Java bytecode.

According to the invention, there are two main parts of code optimisation taking place. The first part is done before transferring the object file to a target device, and the second part is done at the target device after the object file has been downloaded. In the following these two parts will be denoted pre-transfer optimisation and post-transfer optimisation, respectively. Pre-transfer is ahead-of-time optimisation while post-transfer can be ahead-of-time, just-in-time optimisation, or a combination of both.

Initially, the Java bytecode is transformed into CIR which is fed into an optimiser performing a set of code optimisation steps. To reduce the compilation times at the target device, it is desirable to perform as much as possible of the optimisation in the pre-transfer phase. In principle, all optimisation could be done pre-transfer, and the final binary file with machine instructions could be downloaded and executed on the terminal without any post-transfer optimisation. An advantage of this approach is that it would eliminate the compilation time at the terminal.

However, it is an advantage of performing some optimisation steps post-transfer that the resulting intermediate representation is at least partly platform independent. For example, future target devices may have hardware features not anticipated at the time the software was compiled. these features may be exploited by the post-transfer optimisation steps, thereby increasing the efficiency of the generated executable code.

It is a further advantage of generating a (partly) machine independent intermediate representation and performing some post-transfer optimisation on the target device that sites which offer downloads do not need to keep a large number of different program versions for all different hardware platforms.

It is a further advantage of also performing post- transfer optimisation that feedback-directed optimisations may be employed and tuned to the actual behavior of the user of the terminal, instead of limiting the optimisation to target an "average user".

In the following a number of preferred optimisations that preferably can be performed pre-transfer will be described.

It should be noted, however, that the exact distinction as to which optimisation should be pre-transfer and which should be post-transfer may be adjusted to a particular platform. Thus, the exact line between pre and post-transfer optimisation should not be viewed as fixed, but rather be dependent on a number of system-specific design parameters. One example of such a parameter is which instruction set architectures are targeted.

In general, a number of different optimisation techniques are known in the art. Machine-independent optimisations have traditionally used a framework developed during the 1970's and is based on iterative dataflow analysis using bit vectors (see e.g. Al Aho, Revi Sethi, Jeffrey Ullman, "Compilers - Principles, Techniques, and Tools", Addison-Wesley, 1986). During the late 1980's, a new more efficient and powerful framework for optimisation called Static Single Assignment Form, (or SSA form), was developed (see e.g. Andrew Appel, "Modern Compiler Implementation in Java", Cambridge University Press, 1998).

### PRE-TRANSFER OPTIMISATION:

Control flow graph construction and analysis: Before doing optimisation, an analysis of the branch instructions of a procedure should be done. The result of this analysis is a directed graph called the control flow graph. During the construction of the control flow graph, unreachable code is eliminated from the procedure. Using the control flow graph, the dominator tree (see e.g. Andrrew Appel, "Modern Compiler Implementation in Java", Cambridge University Press, 1998) and the loop nests are computed.

Call graph construction: The call graph describes the interprocedural control flow, that is, which procedures each procedure may call. It is used for interprocedural dataflow analysis to determine side effects of procedure calls.

Procedure call optimisations: Here, the goal is to reduce or eliminate the overheads of procedure calls. Small procedures that are known at compile-time (excludes most virtual functions in object oriented programming languages) can be inlined. The call overhead is eliminated when a procedure is inlined, but the efficiency of the instruction cache may be reduced. In addition to eliminating the call overhead, other optimisation techniques usually become more effective since they have larger procedures to work on. Recursive procedures are normally not targets for inlining (although they can be partially inlined) but some recursive procedures can be optimised using a technique called tail-recursion elimination. If there are no statements after a recursive call, the call can be changed to a goto statement to the beginning of the procedure.

Scalar replacement of array references: Scalar replacement of array references is a technique to do register allocation for array elements (see e.g. Randy Allen, Ken Kennedy, "Optimising Compilers for Modern Architectures", Morgan Kaufmann Publishers, 2002). No processor registers are actually allocated by this optimisation, instead array elements are kept in compiler-generated temporary variables. The normal register allocation will then allocate these temporary variables to processor registers (if profitable).

Scalar replacement of array references is itself not very time-consuming to do, but it relies on having data dependence information available. Computing this information in a just-in-time optimiser probably is too expensive under most circumstances.

Constant propagation with conditional branches: Constant propagation simplifies a procedure by propagating constants as much as possible by interpreting the procedure from its first statement. Constant propagation is available on SSA form, and should be performed during pre-transfer optimisations.

Operator strength reduction: Operator strength reduction is also an optimisation technique that targets array references. When array references are in the form a[i], a multiplication is required to find the address of an element. Operator strength reduction transforms array references in loops into code that uses pointers instead (with no need for the multiplication). Operator strength reduction is one of the most important machine-independent optimisations which is available on SSA form, and should preferably be performed during pre-transfer optimisations.

Global value numbering: Global value numbering belongs to the family of optimisation techniques that aim at removing redundant computations. A statement is called redundant if it re-computes a value that has already been computed. In the example below it is assumed that operator strength reductions could not remove the multiplications in the array references (e.g. because the code is not in a loop). In the following code fragment the multiplication of i and the element size in the second array reference is redundant:

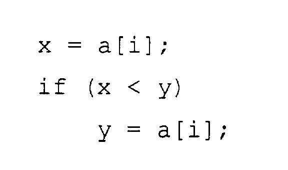

Using the same idea as when finding equivalent states during minimization of a finite state machine, global value numbering proves which statements are equivalent. Under certain circumstances it is possible to remove some of the equivalent statements. Global value numbering is available on SSA form, and should preferably be performed during pre-transfer optimisations.

Partial redundancy elimination: Partial redundancy elimination (PRE) is another technique that aims at removing redundant computations. To explain as simply as possible what PRE can do, consider the following example code fragments:

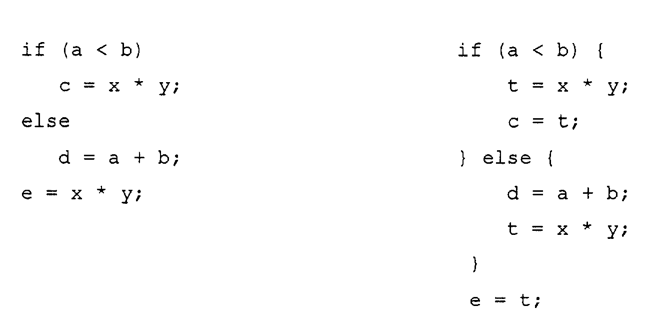

To the left there is a partial redundancy: If the condition is true, x * y will be computed twice. If the condition is false, there is no redundancy. By inserting an extra x * y in the else-part, the second multiplication can be deleted. PRE generalizes this and can also move statements out of loops. PRE is a very powerful optimisation which is quite complicated. PRE is available on SSA and should preferably be performed during pre-transfer optimisations.

Dead code elimination: Using control dependence information, all statements which cannot affect the visible behavior of a procedure (except its execution-time) are deleted during dead code elimination. Dead code elimination is available on SSA form, and should preferably be performed during pre-transfer optimisations.

### POST-TRANSFER OPTIMISATIONS:

In the following a number of optimisation techniques are briefly described which preferably should be performed post-transfer.

Loop unrolling: Loop unrolling duplicates the loop body, thereby removing branch statements. Since Loop unrolling normally increases the size of the code, it should preferably be performed during post-transfer optimisation.

Branch reordering: Using feedback from previous executions, branches can be reordered so that fewer branches will be executed, as is illustrated in the following example code fragment:

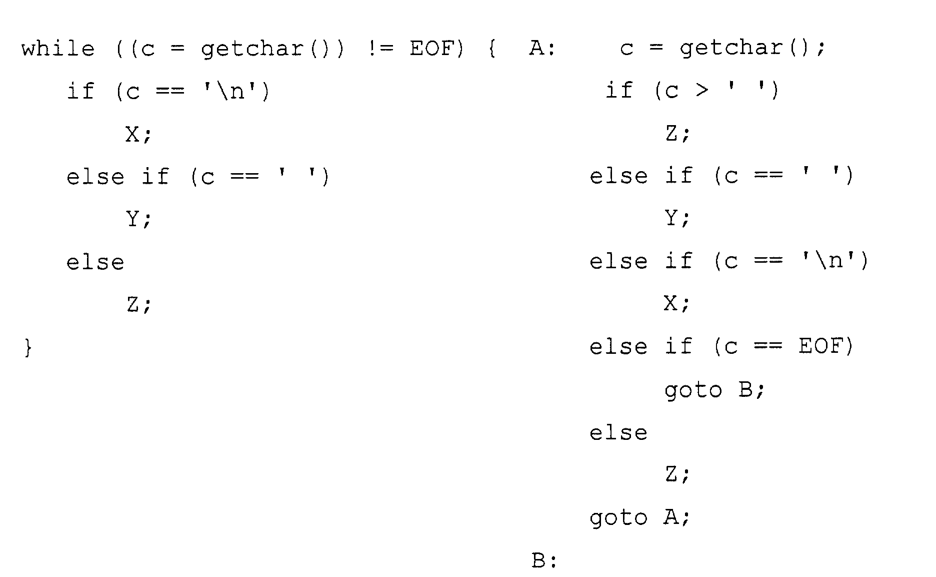

If "newline" and spaces are not the most frequent characters read from input, the code to the right will execute fewer branches than the code to the left. This optimisation may be performed pre- or post-transfer. It is an advantage of performing this optimisation post-transfer that branches may then be tuned to the behavior of a particular user.

First pass of instruction scheduling: Instruction scheduling reorders instructions so that the number of pipeline stalls is reduced. While it could be possible to perform instruction scheduling pre-transfer on a superscalar processor, it would likely produce suboptimal code (as a common model of instruction latencies would have to be assumed). On a superscalar processor, the code would still be functionally correct (since the hardware delays execution when needed) but on a VLIW processor, it would become much more complicated. Scheduling instructions within the scope of straight line code, so called basic blocks, is not very time consuming but useful only for relatively simple processors such as single-issue RISC processors. For superscalar processors, it is necessary to schedule instructions across basic blocks for example using trace scheduling (see e.g. Robert Morgan, "Building an Optimising Compiler", Digital Press, 1998). Scheduling instructions across basic blocks needs the dominator tree of the control flow graph of the procedure being optimised. The dominator tree is also computed for pre-transfer optimisations, and therefore could be stored in the object file and transferred to the terminal. However, recomputing the dominator tree during post-transfer optimisation can be done sufficiently fast. Trace scheduling becomes much more effective with feedback information on the branch frequencies. For many inner loops, much higher performance can be achieved using a more expensive scheduling technique called software pipelining. Software pipelining needs data dependence information about array references, which is time-consuming to compute in a just-in-time compiler. An alternative is to transfer data dependence information only about those inner loops which the pre-transfer optimisation determines to benefit from software pipelining during post-transfer optimisation.

Register allocation: Register allocation decides which variables should be stored in processor registers and when. This optimisation is performed after instruction scheduling, since the information about which variables are used simultaneously becomes known when instruction scheduling is done.

Second pass of instruction scheduling: If the register allocation would spill some variables to memory, a second pass of instruction scheduling is performed to move the load instructions up in the code.

### PLATFORM INDEPENDENCE:

Some optimisations produce better results when they know more about the target platform. For instance, if the instruction scheduler knows the latency of each instruction, it often can produce a better schedule than if it schedules for a processor model with only estimations of the instruction latencies. Despite this, one may wish to perform some typical post-transfer optimisations before downloading to a terminal. As discussed above, one can of course do all optimisations pre-transfer targeting a specific chip. This has the disadvantage of having a version of the application optimised only for a specific instruction set architecture or chip. However, one can also decide to do e.g. instruction scheduling or register allocation (which are typical post-transfer optimisations) in a platform independent way at the cost of less aggressively optimised code.

Among the benefits this would include is easier software distribution since fewer versions are needed. Another benefit is faster post-transfer optimisation since less work remains to do at the terminal. In the following, this trade-off is illustrated for instruction scheduling and register allocation.

Instruction scheduling: Many instruction set architectures have a large set of instructions in common, such as memory access, and integer and floating point arithmetic instructions. Common for most processor chips is also that e.g. multiplication and divide instructions take longer time than other instructions. Therefore, regardless of which target chip the code will be executed on, most schedulers will have similar goals when scheduling many instructions. At pre-transfer, advanced algorithms to schedule instructions are easier to afford, e.g. using data dependence information for array references. Doing instruction scheduling on an intermediate representation assumes that the target processor implements the instructions of that intermediate representation and that they have certain latency, such as one cycle. Some processors may not implement all instructions of a given intermediate representation and must be expanded into several machine instructions at the terminal. This introduces suboptimal code in some cases.

Register allocation: Many instruction set architectures have 32 integer and 32 floating point registers. Register allocation is mostly parameterized by the number of registers which are available for different uses. This is related to the rules about which registers are used for passing parameters and return values, which must be preserved by the callee across a function call, and which the caller must save before and restore after a function call.

Register allocation can be performed partially in a platform independent way as follows. Assume N is the smallest number of registers available to the register allocator on any platform of interest. A typical value of N may be 10. Register allocation is sometimes divided in a local and a global phase. Local register allocation allocates registers to variables which are used only in one basic block and global register allocation allocates to variables used in one function. It is the global register allocation which is time-consuming. An approach to pre-transfer register allocation is to do both global and local register allocation using at most N registers. If that does not succeed, then only global register allocation can be done using at most N registers. At post-transfer, local register allocation can be done relatively fast.

The pre-transfer register allocation cannot assign physical registers since it must take the register usage rules into account. Instead N virtual registers may be allocated (this is different from so called pseudo or symbolic registers commonly used in the literature). However, having an allocation with N registers, it is trivial and fast to assign the physical registers using a vector which maps a virtual register to a physical. In object oriented languages, it is likely that 10 registers will suffice. The described approach can do different things at post-transfer if pre-transfer allocation did not succeed (i.e. some variables could not be allocated a register and were spilled to memory). For instance, it can redo the allocation now using all registers of the platform. Another alternative is to let the spilled variables remain in memory. Yet another alternative is to redo only local allocation if the global was already done.

### INTERMEDIATE LANGUAGE SPECIFICATION:

In the following, a language for a compressible intermediate representation according to an embodiment of the invention is described.

Object file formats: The following describes the parts of an object file, and also comments on opportunities for compression. It is noted, however, that alternative object file formats may use different sections:
- A file header which describes the type of object file, target machine architecture, endianness of the file, whether it was generated for a 32 or a 64 bit architecture, and other information.
- An array of section headers with information of where in the file the instruction section, the data section, etc are stored. Other attributes such as the size of a section is also stored in the section headers.
- Section of instructions, either machine instructions or some form of intermediate representation such as Java byte code or three address code. There can be multiple sections of instructions. These sections are the major targets for a compression according to the invention.
- Section of compile-time initialized data e.g. for global variables. There can be multiple sections of data.
- Section of relocation entries which refer to instructions or data, that must be modified during link-editing to resolve addresses. There are different types of relocation entries and by sorting them at compile-time e.g. by the type and which symbol they refer to, similar relocation entries can be grouped together. This introduces contexts also for relocation entries which then can be compressed.
- Optional section of symbols, (i.e. the symbol table). For statically linked commercial applications, there is normally no symbol table present (since it is not needed for anything). For some programming languages, including Java, it is present to resolve symbols. Symbols have attributes such as which kind of data (e.g. read-only, global and initialized to zero at program start, global and initialized to a value at program start) Another attribute is the size of the symbol. Similar symbols can be grouped together at compile-time to create contexts for compression.
- If there is a symbol table, there is also a separate section of strings used for the symbol names. This section is simply a sequence of null-terminated strings. The identifiers are not stored in the symbol table since that would waste storage and make it impossible to allow arbitrarily long identifier names. To find the name of a symbol, a symbol table entry has a reference (offset) into this section. Related identifiers often have related names such as a common prefix or suffix. By sorting identifiers according to this or other aspects, contexts for compression is introduced.
- Optional debugging information. A modern, compact, and expressive format of debugging information is DWARF 2.1, which supports many languages including Ada 95, C99, C++, Fortran 95, and Java.

Intermediate Representation - Instructions: According to a preferred embodiment of the invention the intermediate representation comprises three-address code which will be referred to as instructions. According to this embodiment, the instructions are tuples with one opcode and a varying number of operands. Hence, the instructions are of variable length, and do not have to be aligned even on a byte boundary. This makes it more complicated to interpret the instructions but saves space.

All symbols do not need to be explicitly stored in the symbol table. For instance, if there is a statement IADDI 1,2,3 it means "add variable 2 and constant 3 and store the result in variable 1". The prefix I denotes the type (integer -- as opposed to floating point) and the suffix I means that the second source operand is an immediate constant. The variables 1 and 2 do not have to be stored in the symbol table. Their locations (offset from stack pointer) on the stack will be decided after decompression. Table 1 lists a set of opcodes of an intermediate representation according to an embodiment of the invention

**Table 1**

| **Instruction** | **Operands** | **Description** |
|---|---|---|
| ENTER | Context[parameters] | Hint to compression |
| EXIT | Context | Hint to compression |
| BA | Label | Unconditional branch to label |
| BEQ | Label | Conditional branch to label if equal |
| BNE | Label | Conditional branch to label if not equal |
| BGE | Label | Conditional branch to label if greater than or equal |
| BLE | Label | Conditional branch to label if less than or equal |
| BLT | Label | Conditional branch to label if less than |
| BGT | Label | Conditional branch to label if greater than |

| RET | | Function return |
|---|---|---|
| LABEL | Number | Label, possible branch target |
| BEGIN | Number | Start of function |
| END | Number | End of function |
| IMOV | Src,dest | Copy integer src to dest |
| BMOV | Src,dest | Copy byte src to dest |
| HMOV | Src,dest | Copy half src to dest |
| FMOV | Src,dest | Copy float src to dest |
| DMOV | Src,dest | Copy double src to dest |
| MEMMOV | Src,size,dest | Copy size bytes from src ti dest |
| ICONST | Const,dest | Dest:=const |
| 12F | Src,dest | Convert from integer to float |
| F2I | Src,dest | Convert from float to integer |
| FADD | Src1,src2,dest | Dest:=src1 + src2 (float) |
| DADD | Src1,src2,dest | Dest:=src1 + src2 (double) |
| IADD | Src1,src2,dest | Dest:=src1 + src2 (integer) |
| IADDI | Src1,src2,dest | Dest:=src1 + src2 (src2 is const) |
| ISUB | Src1,src2,dest | Dest:=src1 - src2 (integer) |
| IMULT | Src1,src2,dest | Dest:=src1 * src2 (integer) |
| IDIV | Src1,src2,dest | Dest:=src1 / src2 (integer) |
| AND | Src1,src2,dest | Dest:=src1 & src2 (integer) |
| OR | Src1,src2,dest | Dest:=src1 \| src2(integer) |
| XOR | Src1,src2,dest | Dest:=src1 ^{^} src2(integer) |
| SLL | Src1,src2,dest | Shift left logical |
| SRL | Src1,src2,dest | Shift right logical |
| SRA | Src1,src2,dest | Shift right arithmetic |
| ICMP | Src1,src2 | Integer compare |
| IARG | Src | Integer argument to function call |
| FARG | Src | Float argument to function call |
| DARG | Src | Double argument to function call |
| ICALL | Callee,dest | Dest:=result of function call |
| FCALL | Callee,dest | Dest:=result of function call |
| DCALL | Callee,dest | Dest:=result of function call |
| PF | Base, offset | Prefetch data |
| TS | Base,offset,dest | Test and set |
| STB | Base,offset,src | Store byte |
| STH | Base,offset,src | Store half |
| STW | Base, offset, src | Store word |
| STLL | Base,offset,src | Store double word |
| STF | Base,offset,src | Store float |
| STD | Base,offset,src | Store double |
| LDSB | Base,offset,dest | Load signed byte |
| LDUB | Base,offset,dest | Load unsigned byte |
| LDSH | Base,offset,dest | Load signed half |
| LDUB | Base,offset,dest | Load unsigned half |
| LDSW | Base,offset,dest | Load signed word |
| LDUW | Base,offset,dest | Load unsigned word |
| LDLL | Base,offset,dest | Load integer double word |
| LDF | Base,offset,dest | Load float |
| LDD | Base,offset,dest | Load double |
| BCHECK | Array,index | Array is reference to JAVA index |
| BCHECKI | Array,const | Index is constant |

It is noted that a complete list of opcodes may comprise further opcodes, e.g. additional conversions. In table 1 above, only IADDI takes a constant operand, but a complete list of opcodes may comprise further instructions that take a constant operand. Furthermore, special opcodes related to a particular source language (e.g. Java) may be needed, as well as special opcodes related to a particular hardware instruction set architecture, e.g. vector instructions if the target processor supports that.

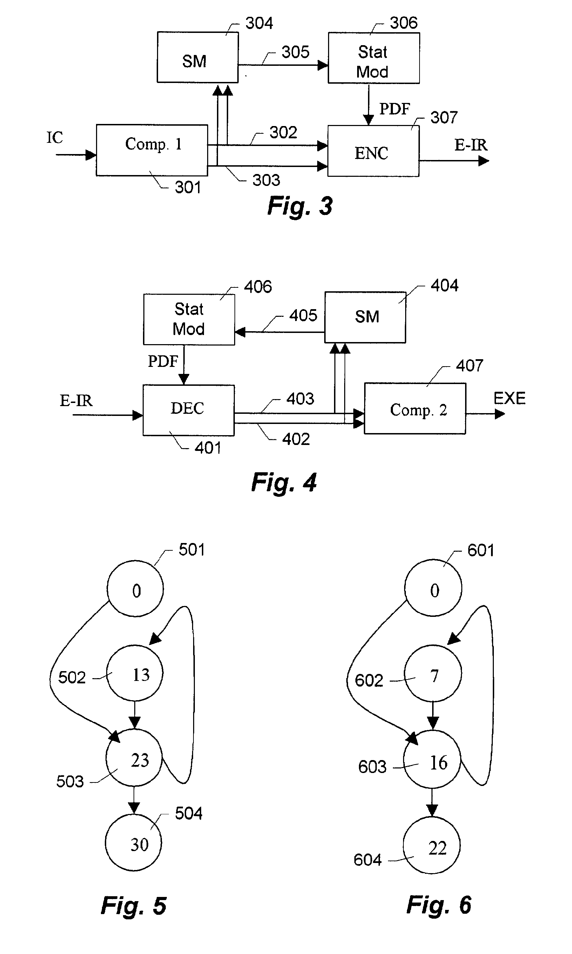

Fig. 3 shows a block diagram of an encoder according to an embodiment of the invention. The encoder comprises a compiler module 301, an encoding module 307 for compressing the compiled data, a state machine module 304, and a statistics module 306 implementing a statistical model.

The compiler module 301 receives the input code IC, i.e. the original form of the program code to be compressed, for instance JAVA bytecode. The compiler 301 compiles the data to an intermediate representation, the so called CIR - Compressible Intermediate Representation. The CIR includes the transformed code 302 and additional compiler information 303 that is used by the compression stage 307 for higher compression ratios. The transformed code 302 and the compiler information are fed into the state machine module 304 and into the encoding module 307. The state machine comprises a number of state variables which are updated according to the transformed code 302 and the compiler information 303 received from the compiler 301. The state machine module outputs state information 305 about the current state of the state machine to the statistics module 306. The statistical model implemented by the statistics module may be viewed as a table of probability density functions that is indexed by the state information 305 from the state machine 304. The probability density function PDF is passed to the encoding module 307. The encoding module 307 compresses the transformed code 302 and the compiler information 303 sequentially to produce an output data string comprising an encoded intermediate representation E-IR. The length of the output data string is equal to the minus log of the probability assigned to the transformed code 302 and compiler information 303 by the statistical model 306. For example, this can be achieved using an arithmetic encoder which is known as such (see e.g. Jones, "An Efficient Coding System for Long Source Sequences", IEEE-IT, vol. 27, 1981.)

Preferably, the transformed code 302 and the compiler information 303 are generated by the compiler 301 as a single string of symbols. In one embodiment, the compiled data is quantized into symbols that represent instructions and operands, respectively. The compiler information is incorporated in the compiled data stream in the form of special instructions (e.g. ENTER <context> and EXIT <context>)

In one embodiment, the statistical model 306 is fixed, with one symbol distribution per state of the state machine. Hence, for each symbol output by the compiler, the corresponding state information 305 is fed by the state machine 304 to the statistical model 306. The set of probability density functions may be determined by analyzing a training set of "typical" data, and stored for each state of the model.

In an alternative embodiment, the statistical model is adaptive and comprises a set of frequency counters for each state of the model. The frequency counters are updated after each symbol that was encoded in a given state. In an adaptive system, the probability density function fed into the encoding module 307 and the decoding module 401 for each state is estimated from the observed data during compression. This has the advantage that it provides a more universal compression, since the system can adapt to a wider variation of data, with statistical behavior that does not conform to a training set. It is an advantage of a fixed distribution that it provides a shorter compressed data string than an estimated distribution. The difference in encoding efficiency is about 0.5 log2 N bits per estimated parameter, where N is the number of encoded symbols. In particular, at the early part of a data stream, a fixed model typically performs better than an adaptive compression.

As described above the states of the state machine 304 are characterized by a number of state variables. The state machine 304 may comprise a number of models that are combined to yield the state variable for the statistical model. The state machine may comprise a syntactic model, where the state is a function of the preceeding symbols from the compiled data stream. The state machine may further comprise an execution model for the compiled data, where the state variable could be, for instance, the content of the stack of the virtual machine, or a function of the memory access pattern. The state machine may further comprise a model which depends on the compiler information, and may include such elements as class information, data types, the register allocation of variables, etc., that are not readily available from the compiled data stream.

Furthermore, the notion of adaptation may also be extended to the state machine, i.e., the state machine module can contain several alternative state machines (which are typically nested in a way such that more complex machines are refinements of more simple ones). Then the state machine is adapted to the encoded data. In one embodiment, the system starts off with a simple state machine comprising few states, and gradually refines the states that are used often. To make use of an adaptive state machine makes sense only if the probability density functions are estimated, since the criteria for adding a state to the machine should be that it can provide a better estimate of the probability density function.

Table 2 below lists a set of state variables according to an embodiment of the invention.

**Table 2.**

| **Name** | **Comment** |
|---|---|
| previous instruction | The last processed instruction. When the symbol under processing is an instruction, this is the previous instruction. When it is an operand, it is the instruction to which the operand belongs |
| #assigned labels | The number of labels used so far in the code. Labels are assigned in numerical order in the code. Hence this variable will give the decoder the label number of each new assignment without any explicit encoding. |
| Variable Stacks (integer and float) | These are stacks containing all the variable numbers used in the code. It is used for the Move-to-front part of the state machine, as described below. |
| Constant stack | D:o for constants |
| Base address stack | D:o for memory base addresses |
| Offset stack | D:o for memory offsets. |
| Context type | Context information provided by the compiler. |

Previous Instruction: This part of the model is intended to capture the dependency between adjacent instructions. The previous instruction conditions the distribution of following instruction.

#Assigned Labels: This state variable is used to condition the distributions of label numbers.

Stack Variables: There are several stack state variables that comprise variables, constants, etc. They are used for Move-to-Front coding (see e.g. B Ryabko, "Data Compression by Means of a Book Stack", Problems of Information Transmission, vol. 16, no. 4, pp.16-21, Oct-Dec 1980), i.e. instead of encoding the variable, constant, etc., its position in the stack is encoded. After encoding, the item is moved to the top of the stack. If there are more than one source operands on the same stack (such as is the case with most arithmetic operations) the stack is not updated until after both have been encoded. With each stack there is associated a distribution that is used to compute the code word. It is chosen such that the probabilities diminish with the position in the stack. Hence this model captures locality of reference; when a variable is used often, it stays at the top of the stack and is assigned a short code word. When there are several stacks with the same type of content, each variable is on only one stack at a time, for instance, either the Integer Variables or the Floating Point Variables Stack. The variable stacks are initialised as an ordered list with zero at the top. The constant stacks are initialised to contain the constant values used, in order of appearance. The list of values is included as a pre-amble to the encoded data.

Context Type: This state variable is provided by the compiler and describes the context of an instruction, such as Arithmetic Context, Function Call Context, etc. The context types are a fixed list of numbers.

As mentioned above, the data stream output by the compiler 301 is parsed by the state machine module 304 and the encoder 307 into symbols of different types. The distribution (PDF) used to encode a given symbol does not need to depend on all state variables. The type of the operand to encode is uniquely determined by the corresponding instruction format. This is deterministic and requires no extra information to be encoded. Table 3 describes the symbol types and the conditioning structure according to an embodiment of the invention.

**Table 3.**

| **Symbol Type** | **Description** | **Conditioned on** |
|---|---|---|
| Instruction | The opcode part of each instruction | Previous instruction, Context type |
| Number | Numbers for labels. For some | Previous instruction, |
| | instructions, this is implicit. | #assigned labels. |
| Context | Help symbol to convey information of the Context type. | previous instruction, Context Type |
| Variable | | Stack indicator, Variable stack |
| Constant | | Stack indicator, Constant Stack |
| Base address | | Base address stack |
| Offset | | Offset stack |

Hence, we have disclosed an example of a state machine model for compression of the intermediate representation according to the invention. The model contains a Markov chain component (the dependency on the previous symbol type), a stack component (for encoding of variables), and a syntactical component (the determination of operand type and number from the instruction). It also makes use of additional information from the compiler (Contexts).

It is noted that the compiler module 301 may also perform code transformations to increase compressibility.

Fig. 4 shows a block diagram of a decoder according to an embodiment of the invention. The decoder comprises a decoding module 401, a compiler module 407, a state machine module 404, and a statistics module 406 implementing a statistical model.

The decoding module 401 receives an input stream comprising the encoded intermediate representation E-IR, e.g. as generated by the encoder described in connection with fig. 3. The decoder extracts the transformed code 402 and the compiler information 403 which is fed as a sequence of symbols into the state machine module 404 which corresponds to the state machine of the encoder. Hence, the state machine 404 updates the state variables and passes corresponding state information to the statistics module 406 which, in turn, generates a probability distribution PDF, as described in connection with fig. 3. The probability distribution 406 for the decoding is identical with the one generated by the model 306 for the encoding of the symbol. The decoding module 401 receives the probability distribution for use in the decoding of the subsequent symbol of the input stream. Hence, the state information 405 should be completely determined by the transformed code 402 and the compiler information 403 in order to allow reconstruction by the decoding module 401. The transformed code 402 and the compiler information 403 output from the decoding module 401 correspond to those input to the encoder 307 of fig. 4. It is noted that the format of the transformed code 402 may not necessarily be one that is normally used for storage during compilation. The transformed code 402 and the compiler information are further fed into the compiler 407 which compiles the transformed code and performs post-transfer optimisation steps resulting in executable code for the relevant target device.

### COMPILER INFORMATION USED FOR POSTTRANSFER OPTIMIZATION:

The compiler information included in the encoded intermediate representation for use by the decoder may comprise different types of compiler information that can be generated for use during optimization after decompression. Both efficient code (execution time and/or space) and short compilation times are desired during optimization after decompression. Some generated compiler information may be used to achieve both of these goals. Two preferred optimizations to be performed after decompression are instruction scheduling and register allocation which were described above. In the following preferred types of compiler information to be communicated from the encoder to the decoder are described:

Reducibility of each flow graph: Depending on the algorithm chosen for instruction scheduling the control flow graph may or may not be analysed to construct its dominator tree. A control flow graph may be reducible or irreducible. Reducible flow graphs can be analysed simpler. However, if a post-transfer optimizer does not know whether a flow graph is reducible, it must assume that it is irreducible and apply an algorithm for constructing the dominator tree which is more general (and slower). By doing a reducibility test on each flow graph during pre-transfer optimization and storing the outcome of this test, the fastest algorithm can be applied after decompression.

Alias information: During instruction scheduling, it often turns out to be desirable to move a 'load' instruction from a location after a 'store' instruction to a location in front of the 'store' instruction. However, this movement can only be done if it is certain that the two instructions refer to different memory locations. When at least one of the addresses is hold in a pointer, this becomes difficult to determine and either the movement is skipped, or a time-consuming alias analysis must be performed (before instruction scheduling). An alias analysis gathers information about which pointers may point to which variables at different locations in the program. Alias information has typically been collected during pre-transfer optimization and, if it is stored in the transferred file, more aggressive instruction scheduling can be done after decompression.

Data dependence information: One advanced form of instruction scheduling is software pipelining, which creates a new loop body that comprises instructions from multiple loop iterations. Doing this can reduce pipeline stalls considerably. To do software pipelining, a data structure called data dependence graph is needed. This graph is quite time-consuming to construct since it needs to analyse every pair of array references in a loop in order to find out whether they can refer to the same memory location and, if they can, what the number of iterations between these two references is. The data dependence graph can be stored in the file which is transferred, thereby reducing the need for a post-transfer analysis.

Optimization priority information: Not all methods need heavy optimization. For instance error handlers may be invoked very rarely, while inner loops of important methods should be focussed on. The pre-transfer optimizations can use static predictions (based for instance on code paths which lead to termination of the application) to mark such methods as less critical for performance.

It is noted that the block diagrams in figs. 3 and 4 are schematic illustrations. In an implementation of an encoder or a decoder according to the invention, the blocks may be divided and/or combined in a different way. For example, the state machine block 404 comprises the syntactic structure of the data model, and largely coincides with the states of at least the first pass of compiler 407. In fig. 4, they are shown as separate blocks 404 and 407, respectively, since some information that is irrelevant for the statistical model may be used by the compiler, and vice versa. In a preferred embodiment, the state machine 404 of the decoder will be part of compiler 407, and should be designed in conjunction with it.

It is further noted that, in an alternative embodiment, the statistical model does not feed the encoder with the PDFs but performs a non-compressing transform of the CIR into a form that can be compressed by a standard compression tool. In this embodiment, the decoding side likewise decompresses the input using the standard tool and then reverse transforms the symbol stream. It is an advantage of this embodiment that it utilises a standard tool which may be expected to be available on the target system.

Fig. 5 illustrates a flow graph of an example segment of Java byte code. The following code fragment is an illustrative example of a Java method:

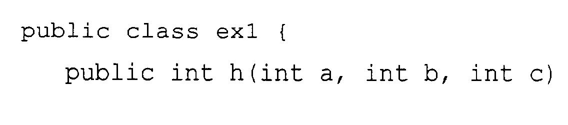

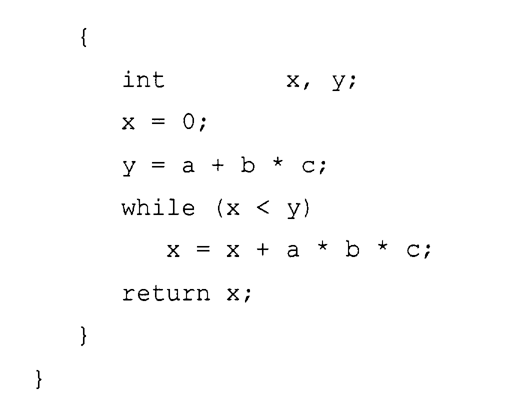

In the above code fragment there is an opportunity for a partial redundancy elimination by moving a * b * c out of the loop. Translated in Java byte code, the above example reads as follows:

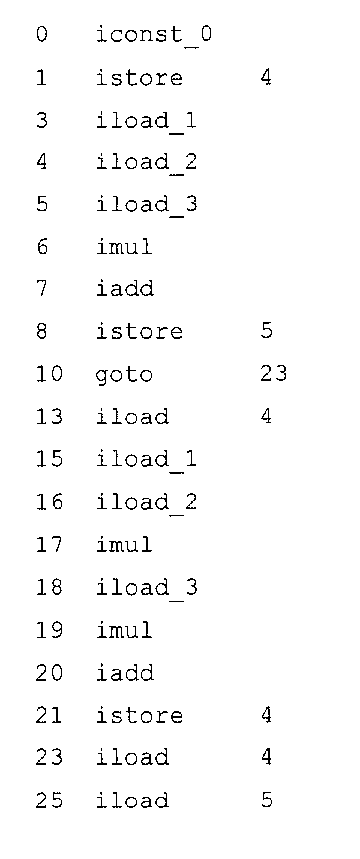

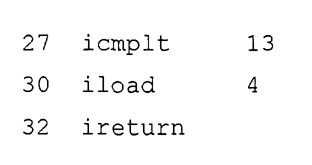

Fig. 5 illustrates the flow in the above example. Starting at symbol 0 (501), the flow continues to symbol 10 which is a goto statement to symbol 23 (503), from which the flow continues to symbol 27. If the termination condition of the loop is fulfilled, the flow continues to symbol 30 (504), otherwise the flow continues from symbol 13 (502) until it again reaches symbol 27.
The following code fragment is a transformation of the above code fragment into the compressible intermediate representation (CIR) described above.

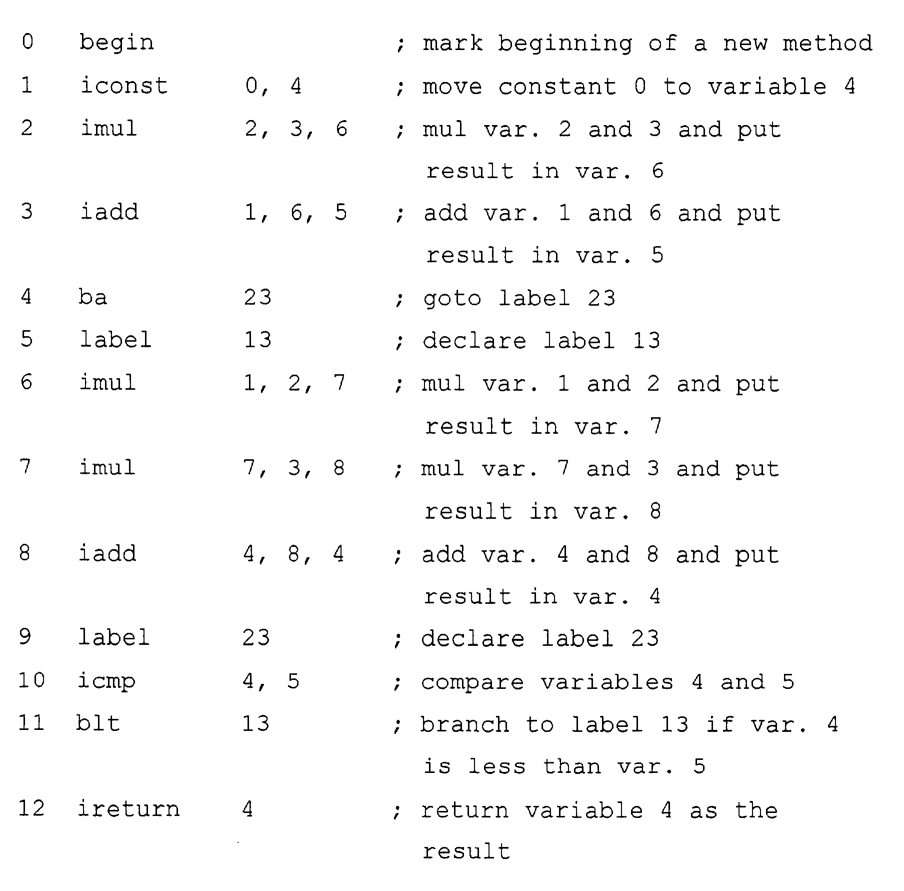

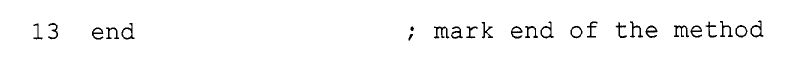

It is noted that the numbers in the beginning of each line, i.e. to the left of each mnemonic, is an instruction number and not an address. Furthermore, the comments in the above code fragment which are separated by a ";" in each line are included merely to improve readability.

After optimisation, the above CIR fragment reads as follows:

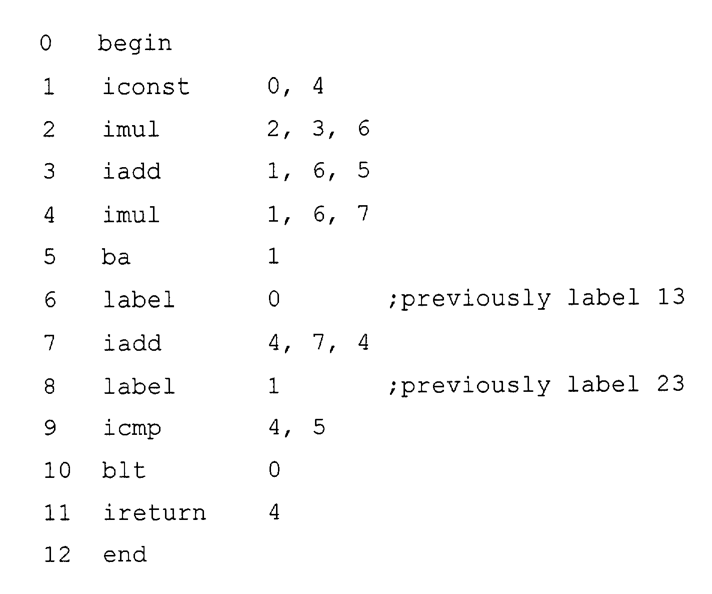

Hence, the multiplications are moved out of the loop. Finally, after inserting additional compiler information comprising information for use by the encoder, the sequence of symbols generated by the compiler 301 of fig. 3 in the above example reads as follows:

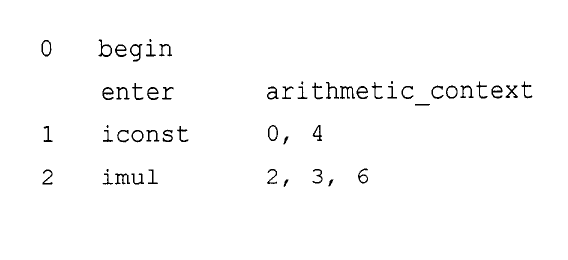

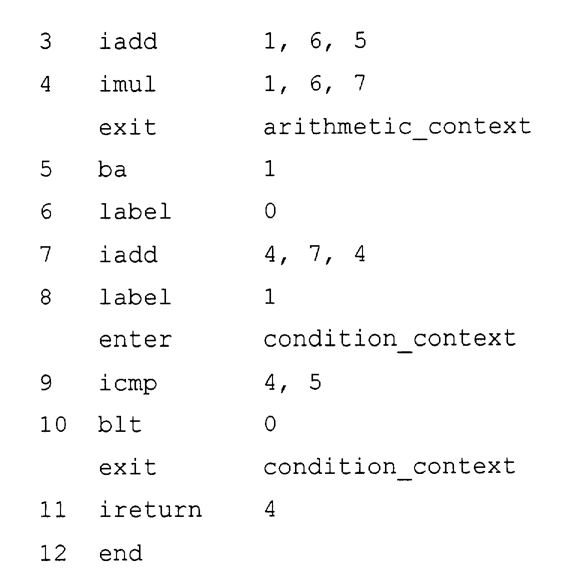

Before encoding of the above CIR code by the encoding module 307, the list of used constant values is created. The stack is initialized, and the context type and last instruction state variables of the state machine 304 are initialized to default values.

Assuming an embodiment where the state machine and the probability density functions are static and known beforehand to the encoder (and decoder), the state of the model may be given by a state variable consisting of the elements Last Instruction, Context Type, Integer Constant Stack, and Integer Variable Stack. This is a subset of the state variable space listed in table 2 above, where the subset is limited to those values that are used in this example.

Hence, for each symbol received by the encoder 307 and the state machine module 304 from the compiler 301, the following steps are performed:
1) The CIR symbol is encoded using the arithmetic coder and the PDF given by the state variable.
2) The state variable is updated. When the elements "Last Instruction" or "Context Type" of the state variable are updated, the variable is set equal to the value of the encoded CIR symbol. When the stack state variables are updated, the CIR symbol is moved to the top of the stack.
3) Repeat steps 1) and 2) for the next symbol until the end of the symbol stream is reached.

Table 4 includes a list of the encoded symbols according to the above procedure. Table 4 further includes the corresponding symbol types, and the corresponding state variables of the state machine 304 which are updated by the state machine module 304 upon receipt of that symbol from the compiling module 301:

**Table 4.**

| **CIR symbol** | **Encoded symbol type** | **Updated state variable** |
|---|---|---|
| Begin | Instruction | Last instruction |
| Enter | Instruction | Last Instruction |
| Arithmetic_context | Context | Context Type |
| Iconst | Instruction | Last instruction |
| 0 | Integer Constant | Integer Constant stack |
| 4 | Integer Variable | Integer variable stack |
| Imul | Instruction | Last instruction |
| 2 | Integer variable | --- |
| 3 | Integer variable | Integer variable stack |
| 6 | Integer variable | Integer variable stack |
| ladd | Instruction | Last instruction |
| 1 | Integer variable | --- |
| 6 | Integer variable | Integer variable stack |
| 5 | Integer variable | Integer variable stack |
| Imul | Instruction | Last instruction |
| 1 | Integer variable | --- |
| 6 | Integer variable | Integer variable stack |
| 7 | Integer variable | Integer variable stack |
| Exit | Instruction | Last Instruction |
| Arithmetic_context | Context | Context Type |
| BA | Instruction | Last instruction |
| 1 | Number | --- |
| Label | Instruction | Last instruction |
| 0 | --- | #assigned labels |
| ladd | Instruction | Last instruction |
| 1 | Integer variable | --- |
| 6 | Integer variable | Integer variable stack |
| 5 | Integer variable | Integer variable stack |
| Label | Instruction | Last instruction |
| 1 | --- | #assigned labels |
| Enter | Instruction | Last instruction |
| Condition context | Context | Context Type |
| Icmp | Instruction | Last instruction |
| 4 | Integer variable | --- |
| 5 | Integer variable | Integer variable stack |
| Blt | Instruction | Last instruction |
| Exit | Instruction | Last instruction |
| Condition context | Context | Context type |
| Ireturn | Instruction | Last instruction |
| 4 | Integer variable | Integer variable stack |
| End | Instruction | Last instruction |

Fig. 6 illustrates a flow graph of another example segment of Java byte code. The following code fragment is an example of another Java method which illustrates another optimisation example:

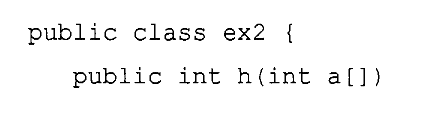

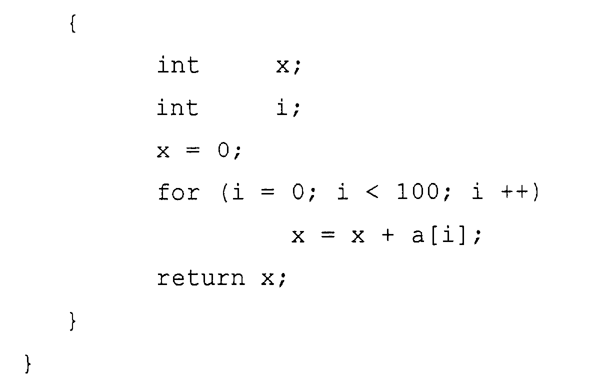

In the above example, an array bounds check is performed at each iteration. Translated in Java byte code, the above example reads as follows:

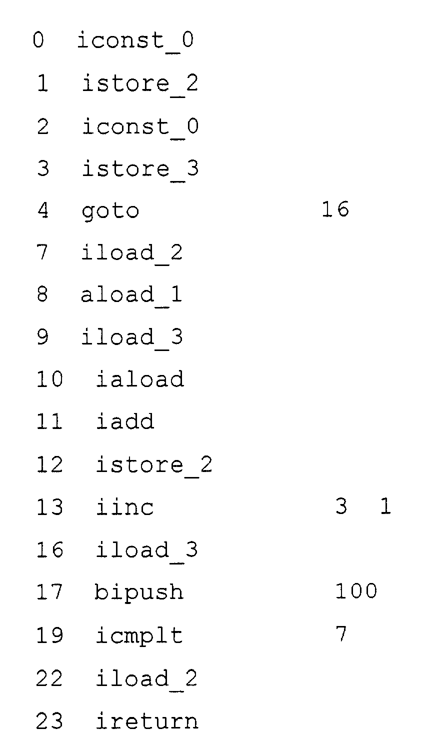

Fig. 6 illustrates a flow graph of the above Java byte code fragment. Starting at symbol 0 (601), the flow continues to symbol 4 which is a goto statement to symbol 16 (603), from which the flow continues to symbol 19. If the termination condition of the loop is fulfilled, the flow continues to symbol 22 (604); otherwise the flow continues from symbol 7 (602) until it again reaches symbol 19. It is noted that, except for the node names, the graph of fig. 6 is identical to that of fig. 5.

After translation of the above Java byte code fragment to unoptimised CIR, the code fragment reads as follows:

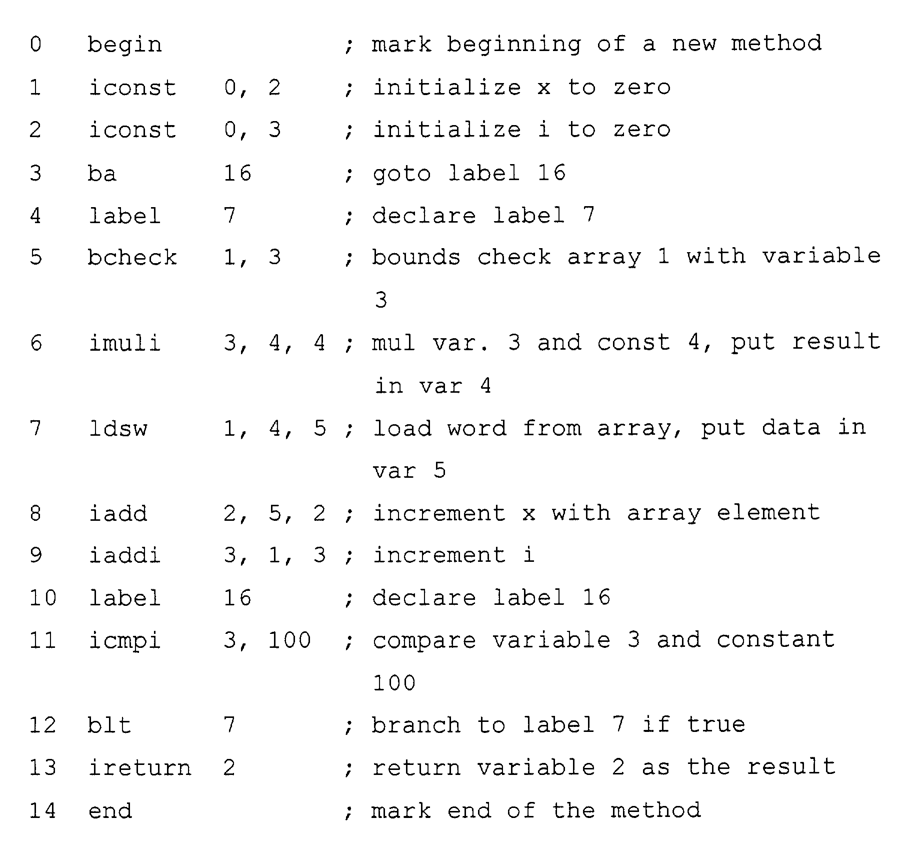

Again, the number to the left of an mnemonic is instruction number and not address, and the comments in the above code fragment which are separated by a ";" in each line are included to improve readability.

In the following it is assumed that an array with N elements is stored in consecutive memory locations as follows: First one word which contains the array size N used for bounds checking, and next the data of the array. Furthermore it is assumed that the array variable (variable 1 in the above CIR code fragment) points to the data of the array. Then, in order to do bounds checking, the word conceptually at index -1 should be used (assuming word sized elements; with elements that have double-word alignment requirements, trivial adjustments are made to ensure proper alignment).

After optimisation, the above CIR fragment reads as follows:

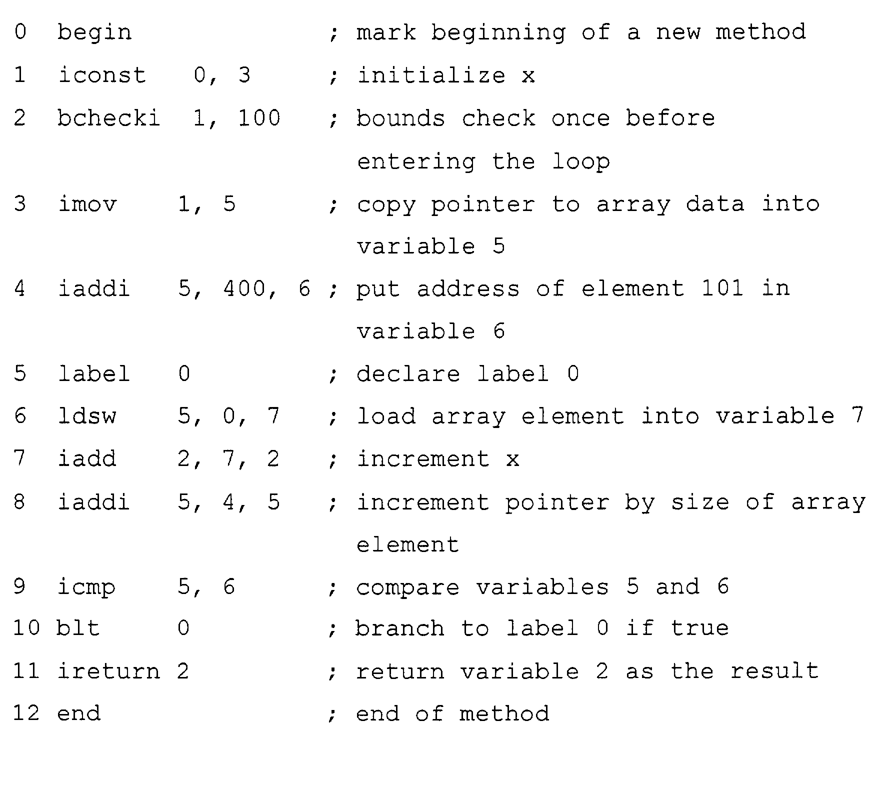

Hence, the array access has been rewritten to use a pointer which traverses the array. The initial branch to label 16 has been removed which also makes it possible to remove the label.

Finally, after inserting additional compiler information comprising information for use by the encoder, the sequence of symbols generated by the compiler 301 of fig. 3 in the above example reads as follows:

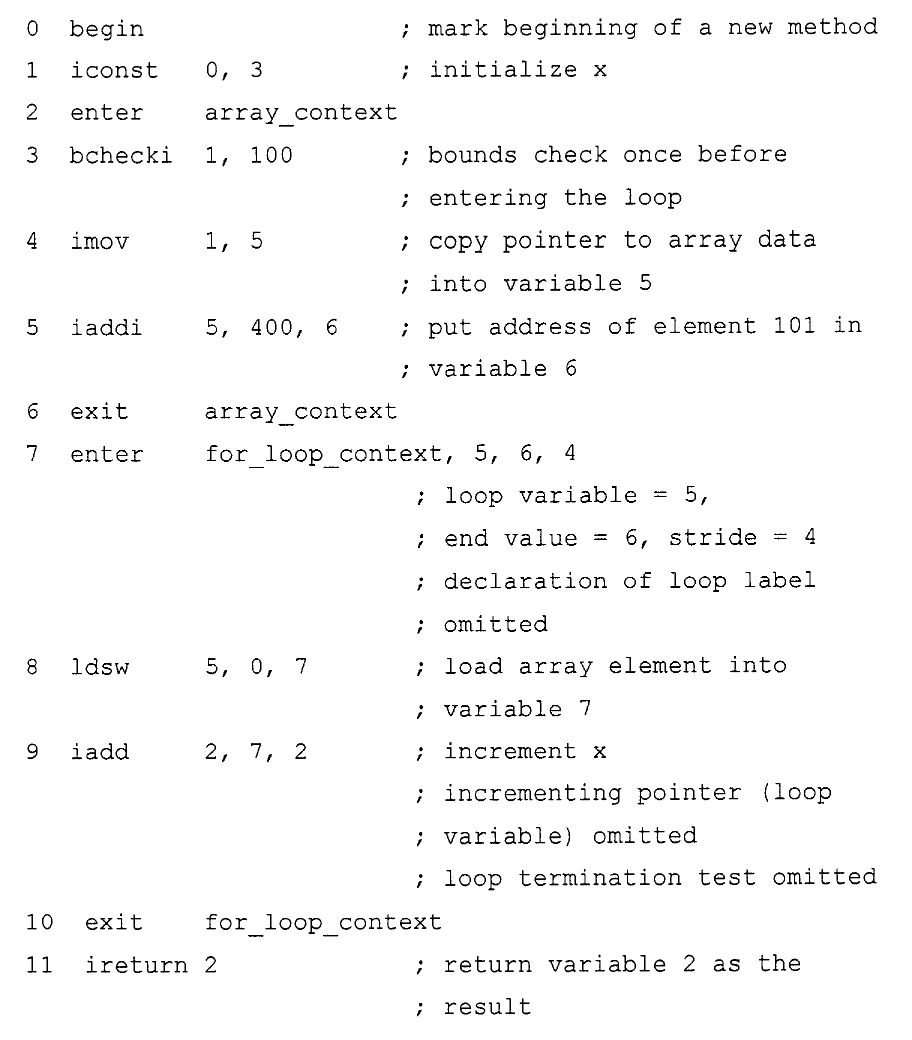

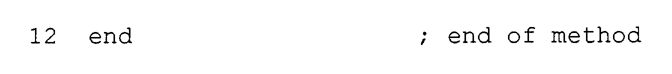

Hence, in the above example the for-loop-context makes it possible to remove more than half of the instructions in the loop body.

In practice, many loops are of the form found in this example. Therefore, a more compact representation is to declare a "loop" instruction with loop variable, end value of the loop variable, and stride. The loop instruction is encoded as a context hint. The benefit of using a loop instruction is that some parts of the loop body can be omitted, namely, incrementing the loop variable and testing for loop termination.

It is noted that in the above examples, no instruction scheduling or register allocation is shown. The code examples show pre-transfer optimisations performed before compression.

It is further noted that there is little platform dependence in the above embodiment of an intermediate representation. An instruction set architecture similar to most microprocessors is assumed. However, for any embodiment of a representation it should be decided how to deal with conditional branches. Processors either store the outcome of a comparison in condition-code registers or in a general purpose register. In the above it was assumed that condition-code registers are used. To generate code at post-transfer for a machine without condition codes, different alternatives are available. For instance, if register allocation is done during post-transfer optimisation, temporary variables are used to hold the outcome of comparisons. These will then be allocated a register as any other variable. On the other hand, if register allocation has already has been done pre-transfer, then a dedicated general purpose register can be used instead.

Fig. 7 shows a block diagram of a data processing system for generating executable program code according to an embodiment of the invention. The data processing system 701 comprises a processing unit (CPU) 704, a communications unit 705, a RAM 711, and a data storage 706, e.g. a hard disk, an EPROM, EEPROM, etc. According to this embodiment, the data processing system 701 receives the input code via the communications unit 705 and a data link 703 from another data processing system (not shown), e.g. from a server of the software supplier. For example, the input code may be downloaded from a website. The received input code is loaded into the RAM 111. Furthermore an encoding program and a state machine model for use by the encoding process are loaded from corresponding sections 710 and 709, respectively, of the data storage 706 into the RAM and executed by the CPU. The encoding program implements an encoding process according to the invention resulting in an optimised compressed intermediate representation E-IR which is stored in a corresponding section 708 of the data storage 706. When the program code encoded in the E-IR is to be executed at a later point in time, a decoding program and the state machine model are loaded from storage sections 710 and 709, respectively, into the RAM. The decoding program is executed by the CPU causing the CPU to load the E-IR from the corresponding section 708 of the data storage 706 into the RAM to decode the encoded representation and generate executable code which, subsequently, is executed by the CPU.

Hence, according to this embodiment, the encoding stage and the decoding stage are performed on the target device, e.g. a mobile phone, i.e. both the pre- and the post-transfer optimisations described above are performed on the target device. In this embodiment, the target device still takes advantage of the high compression rate of the intermediate representation, thereby reducing the required storage capacity. Furthermore, the target device takes advantage of the good optimisations from the off-line optimisation analysis the so-called pre-transfer optimisation performed during the encoding stage, thereby providing efficient code execution without creating a large overhead during the decoding stage which may be implemented as a Just-in-Time operation.

## Claims

1. A method of generating executable program code for a data processing system, the method comprising
an encoding stage for generating a compressed intermediate representation (E-IR) of an input code (IC), the encoding stage comprising:
- transforming (301) the input code including performing a selected set of code optimisation steps resulting in transformed code (302) and compiler information (303) about the transformed code;
- extracting (304,306) state information (305) of a statistical model and statistical information (PDF) from the transformed code and the compiler information; and
- encoding (307) the transformed code and the compiler information using the extracted state information and statistical information and resulting in the compressed intermediate representation;
a decoding stage for generating the executable program code from the compressed intermediate representation, the decoding stage comprising:
- decoding (401) the compressed intermediate representation resulting in the transformed code (402) and the compiler information (403); and
- further compiling (407) the transformed code using the decoded compiler information and resulting in the executable program code (EXE).

2. A method according to claim 1, **characterised in that** the encoding stage is performed on a first data processing system (101) and the decoding stage is performed on a second data processing system (102); the method further comprising transferring the compressed intermediate representation from the first data processing system to the second data processing system.

3. A method according to claim 1 or 2, **characterised in that** the step of generating the state information and statistical information further comprises
- obtaining state information (305) from a state machine (304) based on the transformed code and the compiler information; and
- obtaining probability information (PDF) from a statistical model (306) based on the obtained state information.

4. A method according to claim 3, **characterised in that** the state machine comprises a syntactic model of at least one of the transformed code and the compiler information.

5. A method according to claim 3 or 4, **characterised in that** the state machine comprises an execution model of the transformed code.

6. A method according to any one of claims 3 through 5, **characterised in that** the state machine comprises a model of the compiler information.

7. A method according to any one of claims 1 through 6, **characterised in that** the method further comprises
- storing the compressed intermediate representation; and
- performing the decoding stage in connection with a subsequent execution of the generated executable program code.

8. A method according to any one of claims 1 through 7, **characterised in that** the step of further compiling the transformed code further comprises further optimising the resulting executable code.

9. A method according to any one of claims 1 through 8, **characterised in that** the input code comprises Java bytecode.

10. A method according to any one of claims 1 through 9, **characterised in that** the data processing system is a mobile terminal.

11. A method according to any one of claims 1 through 10, **characterised in that** the transformed code comprises a number of code elements and the method further comprises determining a probability distribution of said code elements and providing the determined probability distribution to the step of generating statistical information.

12. A method of generating program code for a data processing system, the method comprising
- transforming (301) an input code (IC) including performing a selected set of optimisation steps resulting in transformed code (302) and compiler information (303) about the transformed code;
- extracting (304,306) state information (305) of a statistical model and statistical information (PDF) from the transformed code and the compiler information; and
- encoding (307) the transformed code and the compiler information using the extracted state information and statistical information and resulting in a compressed intermediate representation (E-IR) of the input code; the compressed intermediate representation being adapted to be decoded and further compiled in a subsequent decoding stage for generating executable program code.

13. A computer program comprising program code means for performing all the steps of claim 12 when said program is run on a computer.

14. A method of generating executable program code in a data processing system, the method comprising
- receiving a compressed intermediate representation (E-IR) of an input code, the compressed intermediate representation including encoded transformed code generated and at least partially optimised by a compiler and encoded compiler information indicative of further information generated by the compiler about the transformed code, the encoded transformed code and the encoded compiler information being encoded using state information of a statistical model and statistical information extracted from the transformed code and the compiler information;
- decoding (401) the compressed intermediate representation resulting in the transformed code (402) and the compiler information (403); and
- further compiling (407) the transformed code using the decoded compiler information and resulting in the executable program code (EXE).

15. A computer program comprising program code means for performing all the steps of claim 14 when said program is run on a computer.

16. A data processing system for generating executable program code, the system comprising
an encoding module adapted to generate a compressed intermediate representation of an input code, the encoding module comprising:
- first compiler means adapted to transform the input code including performing a selected set of code optimisation steps and resulting in transformed code and compiler information about the transformed code;
- processing means adapted to extract state information of a statistical model and statistical information from the transformed code and the compiler information; and
- encoding means adapted to encode the transformed code and the compiler information using the extracted state information and statistical information and resulting in the compressed intermediate representation;
a decoding module adapted to generate the executable program code from the compressed intermediate representation, the decoding module comprising:
- decoding means adapted to decode the compressed intermediate representation resulting in the transformed code and the compiler information; and
- second compiler means adapted to further compile the transformed code using the decoded compiler information and resulting in the executable program code.

17. An encoding device for generating program code for a data processing system, the encoding device comprising
- compiler means adapted to transform an input code including performing a selected set of code optimisation steps resulting in transformed code and compiler information about the transformed code;
- processing means adapted to extract state information of a statistical model and statistical information from the transformed code and the compiler information; and
- encoding means adapted to encode the transformed code and the compiler information using the extracted state information and statistical information and resulting in a compressed intermediate representation of the input code; the compressed intermediate representation being adapted to be decoded and further compiled in a subsequent decoding stage for generating executable program code.

18. A data processing system for generating executable program code, the data processing system comprising
- receiving means adapted to receive a compressed intermediate representation of an input code, the compressed intermediate representation including encoded transformed code generated and at least partially optimised by a compiler and encoded compiler information generated by the compiler indicative of further information generated by the compiler, the encoded transformed code and the encoded compiler information being encoded using state information of a statistical model and statistical information extracted from the transformed code and of the compiler information;
- decoding means adapted to decode the compressed intermediate representation resulting in the transformed code and the compiler information; and
- compiler means adapted to further compile the transformed code using the decoded compiler information and resulting in the executable program code.

19. A data record comprising a compressed intermediate representation of an input code, the compressed intermediate representation including encoded transformed code generated and at least partially optimised by a compiler and encoded compiler information indicative of further information generated by the compiler, the encoded transformed code and the encoded compiler information being encoded using state information of a statistical model and statistical information extracted from the transformed code and from the compiler information; the compressed intermediate representation being adapted to be decoded and further compiled by a data processing system resulting in executable program code.
